# EUROPÄISCHE PATENTSCHRIFT

(11) **EP 1 289 812 B1**
(45) Veröffentlichungstag und Bekanntmachung des Hinweises auf die Patenterteilung: **04.08.2004**
(21) Anmeldenummer: 01956449.1
(22) Anmeldetag: 30.05.2001
(51) Int. Cl.: B60T 8/00

(54) **BREMSANLAGE FÜR MIT EINER ABS-ANLAGE BZW. EINER GLEITSCHUTZANLAGE AUSGERÜSTETE FAHRZEUGE**
BRAKING SYSTEM FOR VEHICLES PROVIDED WITH ABS OR AN ANTI-SKID PROTECTION SYSTEM
SYSTEME DE FREINAGE POUR VEHICULES POURVUS D'UN SYSTEME ANTIBLOCAGE OU D'UN SYSTEME ANTIPATINAGE

(30) Priorität: 30.05.2000 DE 10026685
(43) Veröffentlichungstag der Anmeldung: 12.03.2003
(73) Patentinhaber: KNORR-BREMSE Systeme für Schienenfahrzeuge GmbH, 80809 München (DE)
(72) Erfinder: MAYER, Reinhold, 85757 Karlsfeld (DE); SCHMID, Ralf, 93161 Sinzing (DE)
(86) Internationale Anmeldenummer: PCT/EP2001/006139
(87) Internationale Veröffentlichungsnummer: WO 2001/092077

(56) Entgegenhaltungen:
- EP-A- 0 276 818
- US-A- 4 969 101
- US-A- 5 791 744

## Beschreibung

Die vorliegende Erfindung betrifft eine Bremsanlage für mit einer ABS-Anlage bzw. einer Gleitschutzanlage ausgerüstete Fahrzeuge gemäß dem Oberbegriff des Patentanspruches 1.

Aus der DE 39 31 313 A1 ist ein Antiblockiersystem für ein Motorrad bekannt, bei dem insgesamt nur zwei Raddrehzahlsensoren vorgesehen sind, wobei der eine dem Vorderrad und der andere dem Hinterrad zugeordnet ist. Zur Bestimmung des Radschlupfes wird eine dem Verlauf der Fahrzeuggeschwindigkeit angenäherte Referenzgröße ermittelt, wobei zwei Kanäle vorgesehen sind. Die beiden Referenzgeschwindigkeiten werden jeweils auf der Basis der zugeordneten Radgeschwindigkeit und einem vom Fahrzustand abhängigen Multiplikator ermittelt.

Die US 5,791,744 A beschreibt ein elektropneumatisches Bremssystem für Schienenfahrzeuge, bei dem jedem Wagen eine "Universaleinheit" zugeordnet ist, welche die Bremsen des jeweiligen Wagens steuert. Eine solche Universaleinheit besteht aus einem Elektronikteil, einem Pneumatikteil und einem elektropneumatischen Teil. Der Elektronikteil weist u.a. eine Schnittstelle für Raddrehzahlsensoren auf.

Die DE 198 26 131 A1 beschreibt ein elektrisches Bremssystem für ein Kraftfahrzeug, bei dem zwei elektronische Rechnerkanäle vorgesehen sind. Bei diesem Bremssystem werden u.a. für die einzelnen Räder individuell Schlupfwerte berechnet. In die Schlupfberechnung gehen die Raddrehzahl des jeweiligen Rades und ein zentral berechneter Schätzwert für die Fahrzeuggeschwindigkeit ein, wobei die Fahrzeuggeschwindigkeit nur einkanalig, d.h. nicht redundant berechnet wird.

Moderne Straßen- und Schienenfahrzeuge sind üblicherweise mit einer Blockierschutzeinrichtung ausgestattet, die bei Straßenfahrzeugen als "ABS-System" und bei Schienenfahrzeugen als "Gleitschutzsystem" bezeichnet wird. ABS-Systeme und Gleitschutzsysteme sollen die Bremsdrücke an einzelnen Rädern bzw. Achsen des Fahrzeugs so regeln, daß ein Blockieren der Räder bzw. Radsätze verhindert und der Bremsweg minimiert wird. Für eine derartige Bremsdruckregelung benötigt man die an den einzelnen Rädern bzw. Achsen vorhandenen Schlupfwerte, die aus den jeweiligen Radgeschwindigkeiten und der tatsächlichen Fahrzeuggeschwindigkeit ermittelt werden. Hierfür sind üblicherweise Raddrehzahlsensoren vorgesehen, wobei aus den einzelnen Raddrehzahlen ein Näherungswert für die tatsächliche Fahrzeuggeschwindigkeit, d.h. eine "Referenzgeschwindigkeit", berechnet wird. Wenn die gemessenen Raddrehzahlsignale fehlerhaft sind, z. B. durch elektromagnetische Störfelder und/oder systembedingte Meßfehler, die zu "Spitzen" im Geschwindigkeits- bzw. Beschleunigungsverlauf der Meßsignale führen, können dann auch bei der Berechnung der Referenzgeschwindigkeit Fehler auftreten.

Eine "falsche" Referenzgeschwindigkeit kann zu Fehlern in der Bremskraftregelung des gesamten Fahrzeugs führen. Dies ist insbesondere bei solchen Fahrzeugen problematisch, die lediglich über ein unabhängiges System zur Bremskraftregelung verfügen.

ABS-Anlagen bzw. Gleitschutzanlagen sind nämlich üblicherweise einkanalig aufgebaut, d.h. die Raddrehzahlen werden einkanalig erfaßt. Wenn ein Raddrehzahlsensor ausfällt, können die zugeordneten Räder nicht mehr entsprechend der vorhandenen Raddrehzahl geregelt werden.

Damit fehlerhafte Raddrehzahlsignale den Referenzgeschwindigkeitswert möglichst nicht verfälschen, weisen herkömmliche Algorithmen zur Berechnung der Referenzgeschwindigkeit zwar eine "Erkennung" fehlerhafter Signale auf, eine sichere Erkennung aller möglichen Fehler ist jedoch sehr aufwendig. Außerdem können sich Fehler bereits während der Fehleroffenbarungszeit so auf die Berechnung der Referenzgeschwindigkeit auswirken, daß die Bremskraftregelung beeinflußt wird.

Aufgabe der Erfindung ist es, eine Bremsanlage zu schaffen, die hinsichtlich der Ermittlung der für eine ABS- bzw. Gleitschutzregelung benötigten tatsächlichen Fahrzeuggeschwindigkeit optimiert ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Bremsanlage mit einer Recheneinrichtung, die mindestens zwei separate "Kanäle" aufweist, auf denen jeweils unabhängig voneinander eine der tatsächlichen Fahrzeuggeschwindigkeit angenäherte "Referenzgeschwindigkeit" ermittelt wird. Die mindestens zwei Referenzgeschwindigkeiten werden jeweils nur zur Regelung eines Teils der im Fahrzeug vorgesehenen Bremsen verwendet.

Die separate Berechnung der Referenzgeschwindigkeiten kann in einem Bremssteuergerät bzw. in einer Recheneinrichtung erfolgen. Jedem der Kanäle ist jeweils nur ein Teil der im Fahrzeug vorhandenen Raddrehzahlsensoren sowie ein Teil der im Fahrzeug vorhandenen Bremsen zugeordnet. Auf jedem Kanal werden Raddrehzahlsignale unterschiedlicher Sensoren zur Berechnung je einer Referenzgeschwindigkeit verwendet. Folglich werden bei zwei Kanälen maximal die Hälfte der im Fahrzeug vorhandenen Bremsen auf der Basis einer der beiden Referenzgeschwindigkeiten geregelt. Selbst wenn nur eine Recheneinrichtung, d.h. ein Bremssteuergerät vorgesehen ist, kann sich bei diesem Prinzip ein bei der Raddrehzahlerfassung auftretender Fehler auf maximal die Hälfte der vorhandenen Bremsen auswirken. Ein Einzelfehler in der Geschwindigkeitserfassung kann daher nicht die gesamte Bremskraft des Fahrzeugs beeinflussen.

Bei der "redundanten" Raddrehzahlerfassung werden immer mindestens zwei Raddrehzahlsignale eines Rades bzw. einer Radgruppe in die Regelung einbezogen. Das Rad bzw. die Radgruppe kann somit auch dann noch geregelt werden, wenn eines der beiden Raddrehzahlsignale ausfällt bzw. gestört ist. Hierdurch wird die Fahrsicherheit wesentlich verbessert.

Nach einer Weiterbildung der Erfindung werden bei einem Fahrzeug bzw. bei mehreren aneinander gekoppelten Fahrzeugeinheiten, das bzw. die jeweils mindestens eine Vorderachse und eine Hinterachse aufweisen, auf jedem Kanal mindestens ein Vorderachssignal und ein Hinterachssignal ausgewertet. An jedem Kanal ist somit mindestens ein Raddrehzahlsensor einer Vorderachse und ein Raddrehzahlsensor einer Hinterachse angeschlossen. Der erste Kanal kann dann z.B. für die Bremskraftregelung der Vorderachse bzw. Vorderachsgruppe und der zweite Kanal für die Bremsdruckregelung der Hinterachse bzw. Hinterachsgruppe verwendet werden.

Nach einer Weiterbildung der Erfindung ist eine Kontrolleinrichtung zur Plausibilitätsprüfung der von den Raddrehzahlsensoren gelieferten Raddrehzahlsignale vorgesehen. Die Raddrehzahlsignale werden insbesondere hinsichtlich "Signalspitzen" überprüft, die auf Störeinflüssen beruhen. In der Kontrolleinrichtung ist ein Auswertealgorithmus implementiert, der "fehlerhafte" Raddrehzahlsignale erkennt und gegebenenfalls für die Berechnung der Referenzgeschwindigkeit ausschließt. Alle erfaßten Raddrehzahlsignale können in einer gemeinsamen Recheneinrichtung ausgewertet, miteinander verglichen und auf Plausibilität überprüft werden. Dies ermöglicht die Erkennung "unplausibler" bzw. "gestörter" Raddrehzahlsignale und erhöht somit die Sicherheit der gesamten Bremsanlage.

Die Erfindung ist sehr kostengünstig realisierbar, da nur eine Recheneinrichtung bzw. nur ein Bremssteuergerät benötigt wird. Eine Anwendung ist bei PKW, LKW, Zweirädern sowie bei Schienenfahrzeugen bzw. Zügen möglich.

Im folgenden wird die Erfindung anhand von Ausfuhrungsbeispielen im Zusammenhang mit der Zeichnung näher erläutert. Es zeigen:
- Fig. 1: ein erstes Ausführungsbeispiel zur Erläuterung des Grundprinzips der Erfindung;
- Fig. 2: ein Ausführungsbeispiel einer Anwendung bei einem Zweirad;
- Fig. 3: ein Ausführungsbeispiel ähnlich dem der Fig. 1;
- Fig. 4: ein Ausführungsbeispiel eines vierachsigen Fahrzeugs mit kinematisch entkoppelten Achsen;
- Fig. 5: ein erstes Ausführungsbeispiel eines sechsachsigen Fahrzeugverbandes;
- Fig. 6: ein zweites Ausführungsbeispiel eines sechsachsigen Fahrzeugverbandes;
- Fig. 7: ein drittes Ausführungsbeispiel eines sechsachsigen Fahrzeugverbandens;
- Fig. 8: ein viertes Ausführungsbeispiel eines sechsachsigen Fahrzeugverbandes;
- Fig. 9: ein Ausführungsbeispiel eines achtachsigen Fahrzeugverbandes; und
- Fig. 10: ein Ausführungsbeispiel eines Triebfahrzeugs mit kinematisch gekoppelten Achsen.

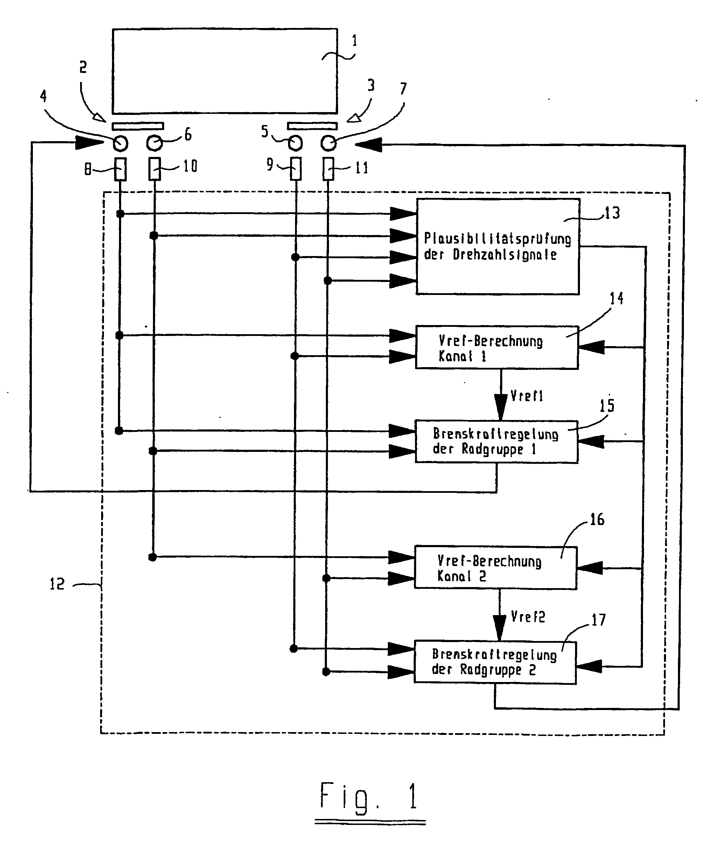

Fig. 1 zeigt ein Fahrzeug 1 mit einer ersten Radgruppe 2 und einer zweiten Radgruppe 3. Die beiden Radgruppen 2, 3 können z.B. Drehgestelle eines Schienenfahrzeugs sein und weisen jeweils eine erste Achse 4, 5 und eine zweite Achse 6, 7 auf. Den Achsen 4-7 sind hier jeweils ein Raddrehzahlsensor 8-11 zugeordnet.

Die Raddrehzahlsensoren 8-11 sind mit einem Bremssteuergerät 12 verbunden, das hier nur schematisch dargestellt ist. Im Bremssteuergerät 12 ist eine Plausibilitätsprüfung 13 implementiert, die fehlerhafte bzw. "gestörte" Raddrehzahlsignale erkennen und gegebenenfalls aussondern soll.

Das Bremssteuergerät 12 weist ferner zwei Kanäle zur separaten bzw. unabhängigen Berechnung jeweils einer der tatsächlichen Fahrzeuggeschwindigkeit angenäherten Referenzgeschwindigkeit auf. Im Fahrzeug 1 vorgesehene Bremsen (nicht dargestellt) sind einer ersten bzw. einer zweiten Gruppe zugeordnet. Die erste Gruppe ist hier durch die Bremsen der ersten Radgruppe 2 und die zweite Gruppe durch die Bremsen der zweiten Radgruppe 3 gebildet. Die Bremsen der ersten Radgruppe 2 werden durch einen ersten Kanal des Bremssteuergeräts 12 und die der zweiten Radgruppe 3 durch einen zweiten Kanal des Bremssteuergeräts 12 geregelt.

Auf dem ersten Kanal werden die von den Raddrehzahlsensoren 8, 9 gelieferten Raddrehzahlsignale ausgewertet. Sofern die Plausibilitatsprüfung 13 ergibt, daß die von den Raddrehzahlsensoren 8, 9 gelieferten Signale plausibel sind, gehen beide Signale in die Referenzgeschwindigkeitsberechnung 14 des ersten Kanals ein.

Bei der Referenzgeschwindigkeitsberechnung 14 können z.B. beide von den Raddrehzahlsensoren 8, 9 gelieferten Signale zu einer ersten Referenzgeschwindigkeit V_{ref1} miteinander verknüpft werden. Bei einem Bremsvorgang kann es jedoch auch sinnvoll sein, die größere der von den Raddrehzahlsensoren 8, 9 gemessene Geschwindigkeit als V_{ref1} anzusehen. Sofern das Fahrzeug 1 ein Triebfahrzeug ist und gerade beschleunigt wird, kann es hingegen sinnvoll sein, die kleinere der beiden von den Raddrehzahlsensoren 8, 9 gemessene Geschwindigkeit als Referenzgeschwindigkeit V_{ref1} anzunehmen.

Die auf der Basis von Raddrehzahlsignalen der ersten Radgruppe 2 und der zweiten Radgruppe 3 ermittelte Referenzgeschwindigkeit V_{ref1} wird zur Bremskraftregelung 15 der ersten Radgruppe 2 verwendet. In die "Bremskraftregelung" 15 gehen die von den Raddrehzahlsensoren 8, 10 der ersten Radgruppe 2 gelieferten Raddrehzahlsignale ein. Ferner werden bei der Bremskraftregelung 15 die Ergebnisse der Plausibilitätsprüfung 13 berücksichtigt. Werden die von den Raddrehzahlsensoren 8, 10 gelieferten Signale als plausibel angesehen, so können sie beide berücksichtigt werden. Andernfalls kann ein gegebenenfalls fehlerhaftes Signal unberücksichtigt bleiben.

Für die Bremskraftregelung der zweiten Radgruppe 3 ist der zweite Kanal vorgesehen. Auf Kanal 2 wird mit den von den Raddrehzahlsensoren 10, 11 gelieferten Signalen eine Referenzgeschwindigkeitsberechnung 16 durchgeführt, wobei analog zu Kanal 1 die Ergebnisse der Plausibilitätsprüfung 13 berücksichtigt werden. Auf der Basis der ermittelten Referenzgeschwindigkeit V_{ref2} werden Steuersignale für eine Bremskraftregelung 17 erzeugt. Bei der Bremskraftregelung 17 werden die von den Raddrehzahlsensoren 9, 11 gelieferten Signale sowie die Ergebnisse der Plausibilitätsprüfung 13 ausgewertet.

Ein wesentlicher Vorteil der Erfindung besteht darin, daß sich ein Fehler bzw. eine Störung auf einem der beiden Kanäle maximal auf die Hälfte der im Fahrzeug 1 vorhandenen Bremsen auswirken kann. Fällt beispielsweise einer der beiden Kanäle vollständig aus, bleiben die Bremsen des anderen Kanals weiterhin regelbar. Alternativ zu dem hier gezeigten Ausführungsbeispiel können auch mehr als zwei Kanäle vorgesehen sein, was die Ausfallsicherheit weiter verbessert.

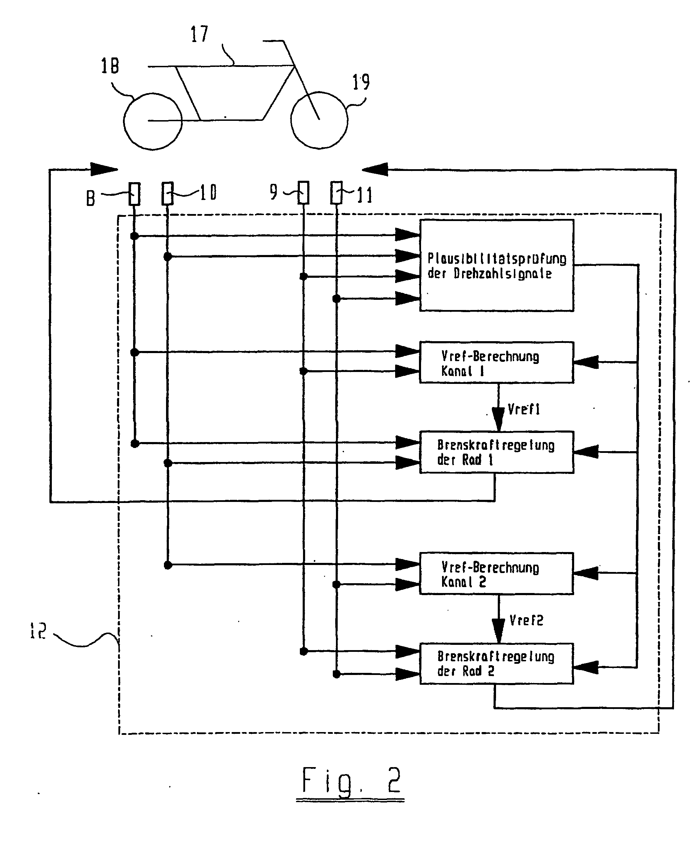

Fig. 2 zeigt ein Ausführungsbeispiel im Zusammenhang mit einem Zweirad 17, das ein Hinterrad 18 und ein Vorderrad 19 aufweist. Am Hinterrad 18 sind die beiden Raddrehzahlsensoren 8, 10 und am Vorderrad 19 die beiden Raddrehzahlsensoren 9, 11 vorgesehen, die jeweils unabhängig voneinander die Geschwindigkeit des Vorderrades bzw. Hinterrades messen. Die Raddrehzahlsensoren 8-11 sind an das Bremssteuergerät 12 angeschlossen, das analog zu Fig. 1 aufgebaut ist. Analog zu Fig. 1 sind auch hier zwei separate Kanäle vorgesehen, wobei jedem Kanal ein Raddrehzahlsensor 8, 9 bzw. 10, 11 zugeordnet ist. Bei dem hier gezeigten Ausführungsbeispiel wird die Hinterradbremse (nicht dargestellt) durch Kanal 1 und die Vorderradbremse durch Kanal 2 geregelt. Die Raddrehzahlsensoren 8, 10 bzw. 9, 11 können in einem "Doppelimpulsgeber" integriert sein, der kostengünstiger als zwei Einzelsensoren ist.

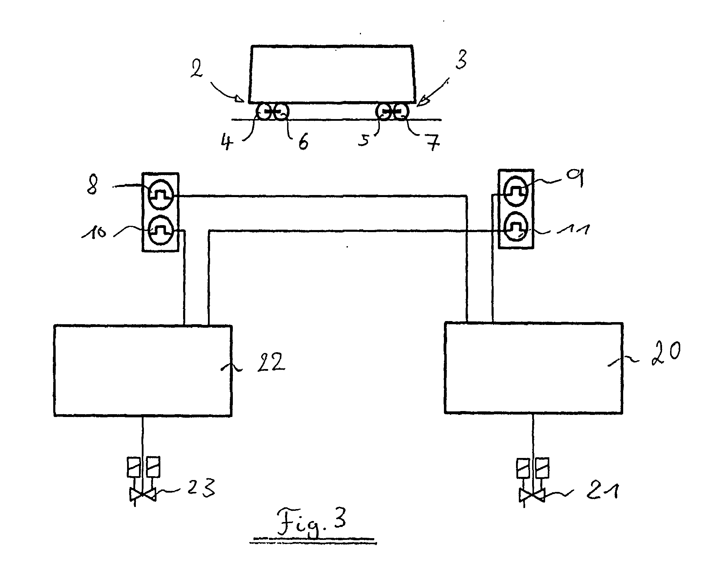

Fig. 3 zeigt ein Ausführungsbeispiel ähnlich dem der Fig. 1, wobei die Achsen 4, 6 der ersten Radgruppe 2 und die Achsen 5, 7 der zweiten Radgruppe 3 jeweils kinematisch gekoppelt sind, z.B. über eine Schubstange oder ein Getriebe. Den Achsen 4, 6 bzw. 5, 7 sind jeweils die Raddrehzahlsensoren 8-11 zugeordnet. Analog dem Ausführungsbeispiel der Fig. 1 sind die Raddrehzahlsensoren 8, 9 einem ersten Kanal 20 zugeordnet, der zur Steuerung einer ersten - hier nur schematisch dargestellten - Gruppe von Bremsen 21 vorgesehen ist. Analog dazu sind die Raddrehzahlsensoren 10, 11 einem zweiten Kanal 22 zugeordnet, der zur Steuerung einer zweiten Bremsgruppe 23 vorgesehen ist. Wenngleich die beiden Kanäle 20, 22 als separate "Einheiten" dargestellt sind, können sie, wie in den Fig. 1 und 2 dargestellt, durch eine gemeinsame Recheneinrichtung gebildet sein.

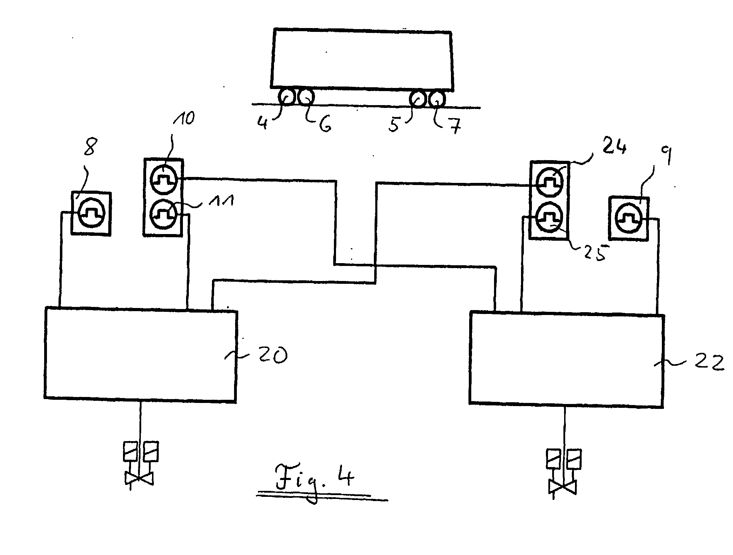

Fig. 4 zeigt ein weiteres Ausführungsbeispiel eines vierachsigen Fahrzeugs. Im Gegensatz zu dem Ausführungsbeispiel der Fig. 3 sind hier die Achsen 4 und 6 der ersten Radgruppe bzw. die Achsen 5 und 7 der zweiten Radgruppe kinematisch voneinander entkoppelt. An den Achsen 4 und 7 ist jeweils ein Raddrehzahlsensor 8, 9 vorgesehen. An den Achsen 5 und 6 sind jeweils zwei Raddrehzahlsensoren 10, 11 bzw. 24, 25 vorgesehen. Die Raddrehzahlsensorn 8, 10, 11 sind dem ersten Kanal 20 und die Raddrehzahlsensoren 9, 24, 25 sind dem zweiten Kanal 22 zugeordnet, wobei der Kanal 20 die Bremssteuerung z.B. an den Achsen 4 und 6 und der Kanal 22 die Bremssteuerung an den Achsen 5 und 7 übernimmt.

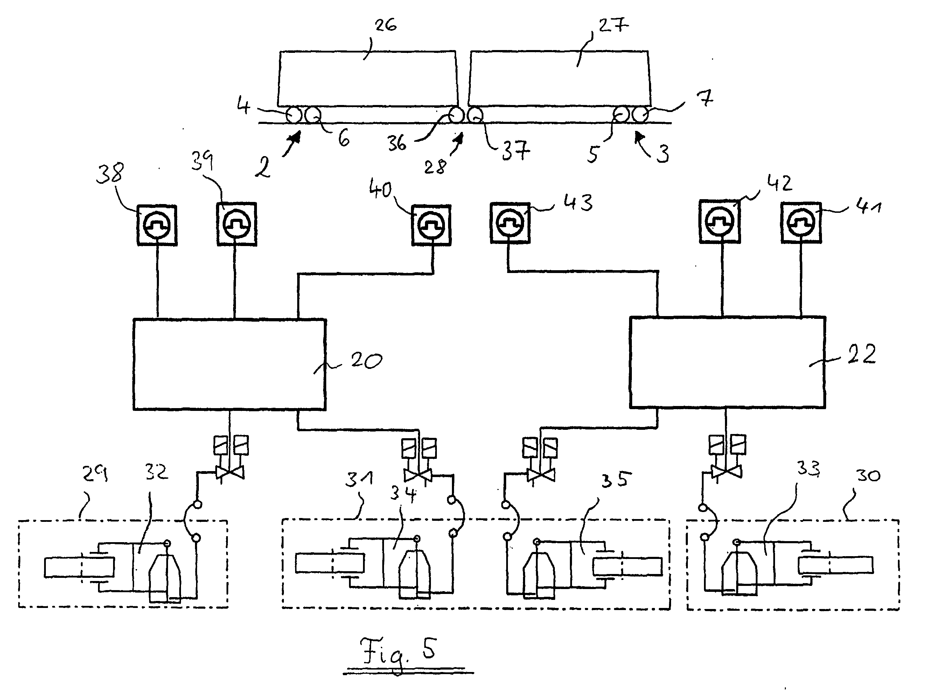

Fig. 5 zeigt ein Ausführungsbeispiel für ein sechsachsiges Fahrzeug, das aus zwei miteinander gekoppelten Fahrzeugeinheiten 26, 27 besteht. Der Fahrzeugeinheit 26 ist eine erste Radgruppe 2 und der Fahrzeugeinheit 27 eine zweite Radgruppe 3 zugeordnet. Ferner ist eine "mittlere" Radgruppe 28 vorgesehen, die beiden Fahrzeugeinheiten 26, 27 zugeordnet ist. Die Radgruppen 2, 3, 28 sind z.B. Drehgestelle eines Schienenfahrzeugs, denen jeweils eine Bremsgruppe 29-31 zugeordnet ist, wobei die Bremsgruppen 29, 30 jeweils eine Bremseinheit 32, 33 und die Bremsgruppe 31 zwei Bremseinheiten 34, 35 aufweist. Unter dem Begriff "Bremseinheit" ist hier eine einzelne Bremse oder eine Gruppe von Bremsen zu verstehen, die mit einem gemeinsamen Bremsdruck angesteuert werden.

Die Bremseinheiten 32, 34 werden durch den ersten Kanal 20 angesteuert, und die Bremseinheiten 33, 35 werden durch den zweiten Kanal 22 angesteuert. Dem ersten Kanal 20 sind hier jeweils ein Raddrehzahlsensor 38, 39 der Achsen 4, 6 sowie ein Raddrehzahlsensor 40 einer Achse 36 der mittleren Radgruppe 28 zugeordnet. Dem zweiten Kanal 22 sind Raddrehzahlsensoren 41, 42 der Achsen 5, 7 sowie ein Raddrehzahlsensor 43 einer Achse 37 der mittleren Radgruppe 28 zugeordnet.

Bei dem in Fig. 5 gezeigten Ausführungsbeispiel sind die sechs Achsen 4-7, 36, 37 kinematisch nicht gekoppelt. Die Bremsen der Achsen 36, 37 können mit unterschiedlichen Bremsdrücken beaufschlagt werden, wobei die Bremssteuerung der Bremseinheit 34 über den ersten Kanal 20 und die Bremssteuerung der Bremseinheit 35 über den zweiten Kanal 22 erfolgt. Die Bremseinheit 32 wird ebenfalls vom ersten Kanal 20 und die Bremseinheit 33 vom zweiten Kanal 22 gesteuert.

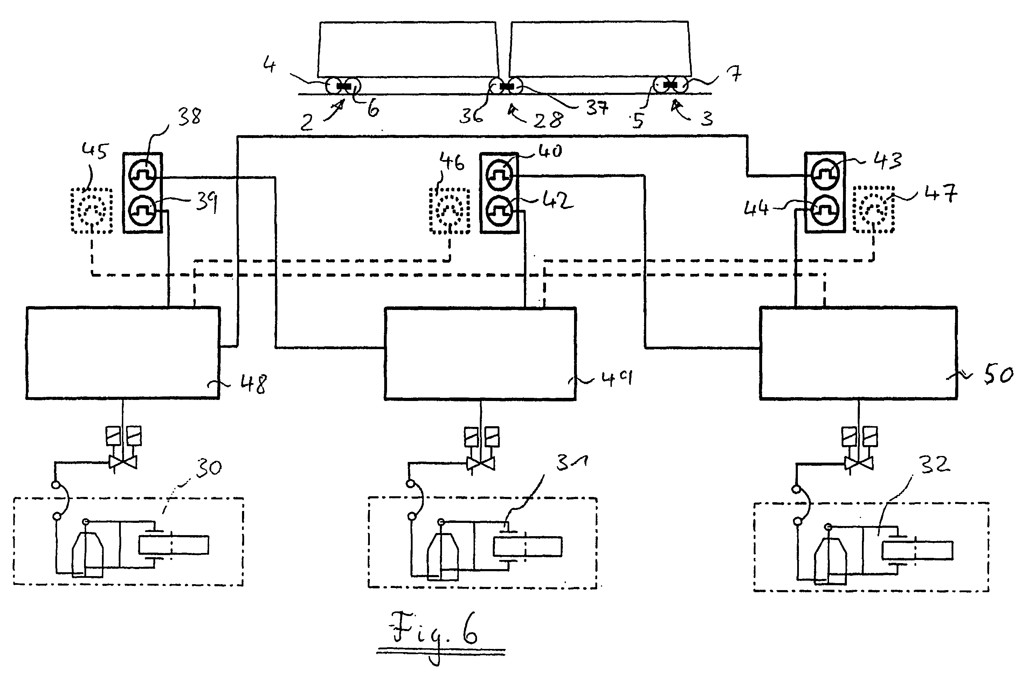

Fig. 6 zeigt ein Ausführungsbeispiel eines sechsachsigen Fahrzeugs, bei dem die einzelnen Achsen der Radgruppen 2, 3, 28 kinematisch gekoppelt sind, z.B. durch ein Getriebe oder eine Schubstange. An der Achse 6 der Radgruppe 2, der Achse 37 der Radgruppe 28 und an der Achse 5 der Radgruppe 3 sind hier jeweils zwei Raddrehzahlsensoren 38-44 vorgesehen. Ferner kann an den Achsen 4, 7, 36 jeweils ein weiterer Raddrehzahlsensor 45-47 vorgesehen sein, die hier gestrichelt dargestellt sind.

Im Gegensatz zu den oben erläuterten Ausführungsbeispielen sind hier drei Kanäle 48-50 vorgesehen. Dem ersten Kanal 48 sind die Raddrehzahlsensoren 39, 43 und 46 zugeordnet, dem zweiten Kanal 49 die Raddrehzahlsensoren 38, 42 und 47 und dem dritten Kanal 50 die Raddrehzahlsensoren 40, 44 und 45. Da die einzelen Achsen der Radgruppen 2, 3, 28 kinematisch gekoppelt sind, sind hier nur drei Bremseinheiten 30-32 vorhanden. Die Bremseinheit 30 wird vom ersten Kanal 48, die Bremseinheit 31 vom zweiten Kanal 49 und die Bremseinheit 32 vom dritten Kanal 50 gesteuert. Im Gegensatz zum Ausführungsbeispiel der Fig. 5 werden hier die einzelnen Bremsen der Radgruppen 2, 3, 28 jeweils mit dem gleichen Bremsdruck angesteuert.

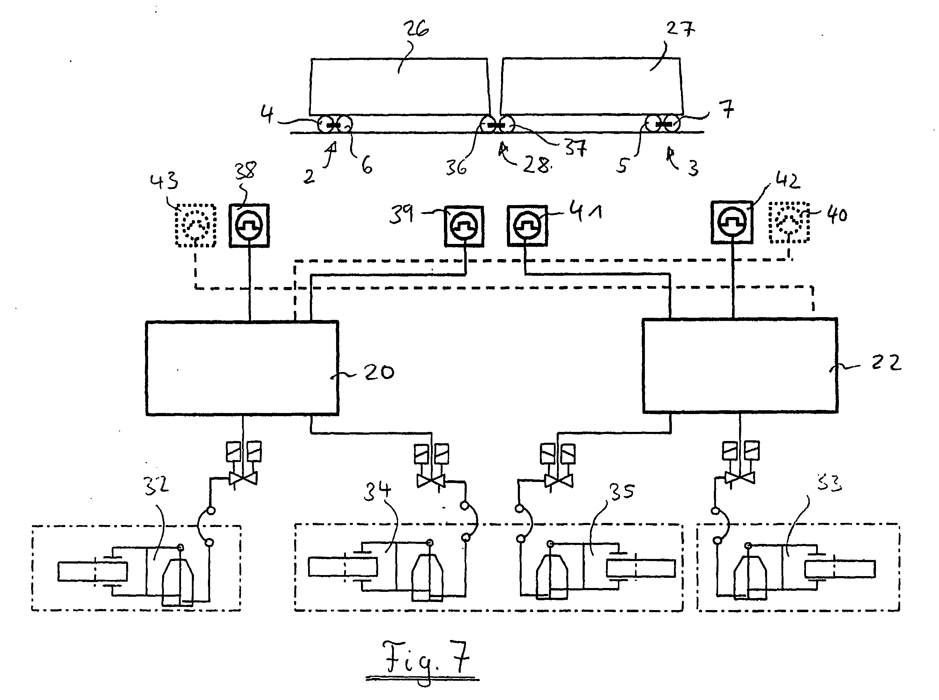

Fig. 7 zeigt ein weiteres Ausführungsbeispiel für ein sechsachsiges Fahrzeug, bei dem die Achsen der Radgruppen 2, 3 und 28 kinematisch gekoppelt sind. Im Gegensatz zu Fig. 6 sind hier nur zwei Kanäle 20, 22 vorgesehen. Der Kanal 20 steuert die Bremseinheiten 32 und 34 der Radgruppen 2 bzw. 28, und der Kanal 22 steuert die Bremseinheiten 33 bzw. 35 der Radgruppen 3 bzw. 28. Dem ersten Kanal 20 sind die Raddrehzahlsensoren 38, 39 der Achsen 6 bzw. 36 zugeordnet. Zusätzlich dazu kann dem Kanal 20 ein Raddrehzahlsensor 40 der Achse 7 zugeordnet sein. Dem Kanal 20 sind dann zwei Raddrehzahlsensoren der Fahrzeugeinheit 26 und ein Raddrehzahlsensor der Fahrzeugeinheit 27 zugeordnet.

Analog dazu ist dem zweiten Kanal 22 der Raddrehzahlsensor 41 der Achse 37, der Raddrehzahlsensor 42 der Achse 5 und optional der Raddrehzahlsensor 43 der Achse 4 zugeordnet. Der Kanal 22 wertet somit zwei Raddrehzahlsignale der Fahrzeugeinheit 27 und ein Raddrehzahlsignal der Fahrzeugeinheit 26 aus.

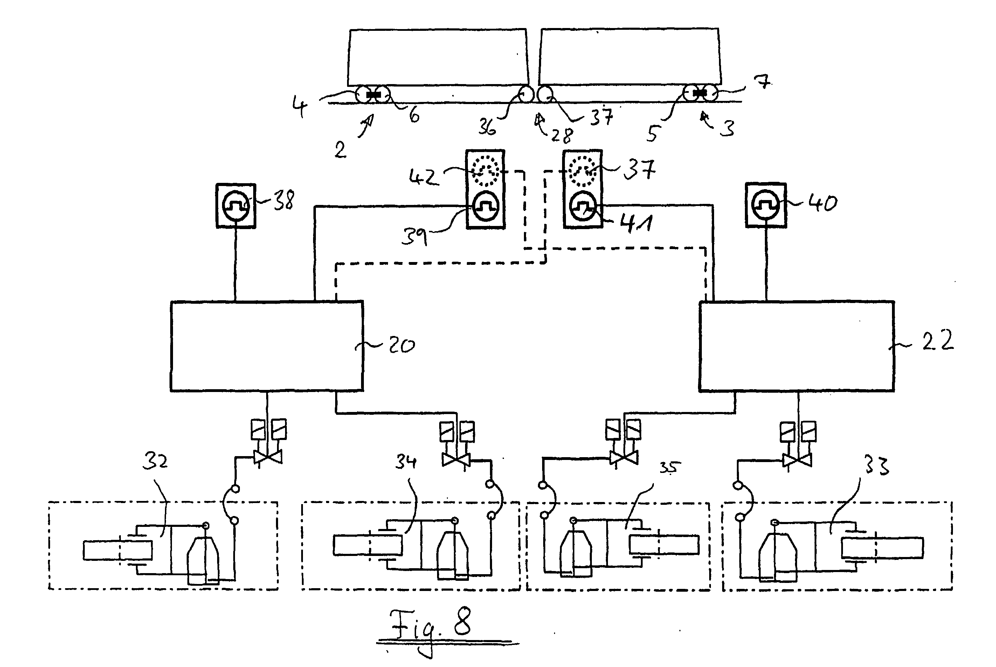

Fig. 8 zeigt ein weiteres Ausführungsbeispiel für ein sechsachsiges Fahrzeug. Bei diesem Ausführungsbeispiel sind die beiden Achsen 4, 6 der Radgruppe 2 und die Achsen 5, 7 der Radgruppe 3 jeweils kinematisch miteinander gekoppelt. Die Achsen 36, 37 der mittleren Radgruppe 28 hingegen sind kinematisch nicht gekoppelt. Dementsprechend können die zugeordneten Bremseinheiten 34, 35 der Achsen 36, 37 mit unterschiedlichen Bremsdrücken angesteuert werden. Die Bremseinheit 34 wird zusammen mit der Bremseinheit 32 der Radgruppe 2 durch den ersten Kanal 20 angesteuert, und die Bremseinheiten 33, 35 werden durch den zweiten Kanal 22 angesteuert. Dem Kanal 20 ist hier ein Raddrehzahlsensor 38 der Radgruppe 2 und der Drehzahlsensor 39 der Achse 36 zugeordnet. Optional kann dem Kanal 20 der Raddrehzahlsensor 40 der Achse 37 zugeordnet sein. Analog dazu sind dem zweiten Kanal 22 ein Raddrehzahlsensor 40 der Radgruppe 3, ein Raddrehzahlsensor 41 der Achse 37 und optional ein Raddrehzahlsensor 42 der Achse 36 zugeordnet.

Bei dem in Fig. 8 gezeigten Ausführungsbeispiel sind somit zwei kinematisch entkoppelte und vier jeweils paarweise kinematisch gekoppelte Achsen vorgesehen, wobei die Bremsen der mittleren Radgruppe 28 mit unterschiedlichen Bremsdrücken beaufschlagbar sind.

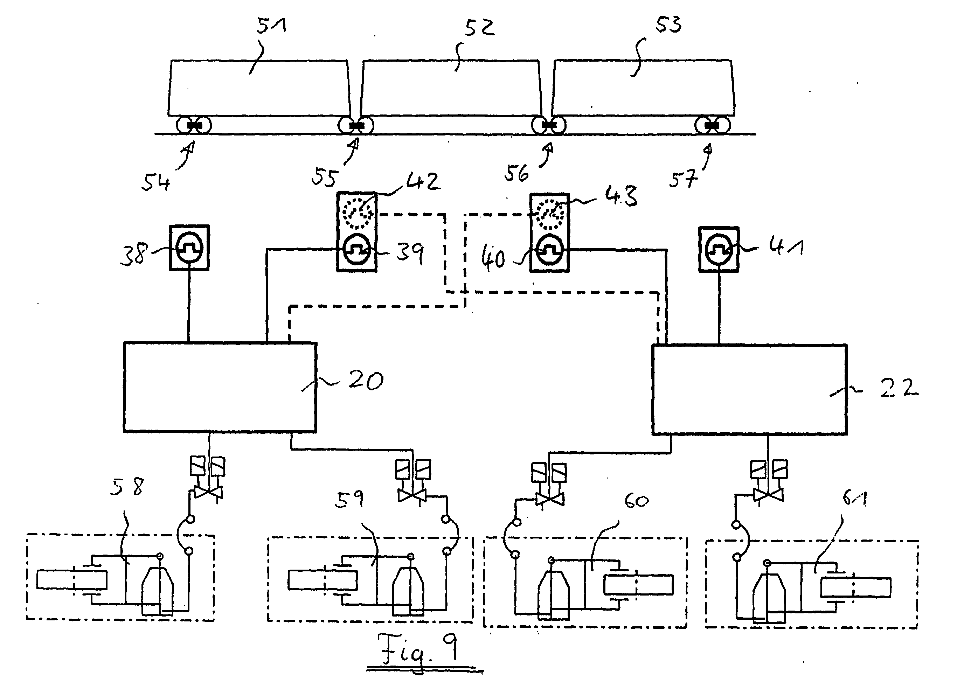

Fig. 9 zeigt ein achtachsiges Fahrzeug, das aus drei Fahrzeugeinheiten 51-53 besteht und vier Radgruppen 54-57 aufweist. Jede der Radgruppen besteht aus zwei Achsen, die jeweils kinematisch miteinander gekoppelt sind. Ferner ist jeder Radgruppe 54-57 jeweils mindestens ein Raddrehzahlsensor 38-41 zugeordnet. An den Radgruppen 55, 56 kann optional jeweils ein zweiter Raddrehzahlsensor 42, 43 vorgesehen sein. Dem ersten Kanal 20 sind hier die Raddrehzahlsensoren 38, 39, 43 und dem zweiten Kanal 22 die Raddrehzahlsensoren 40, 41 und 42 zugeordnet. Die Bremsen der Radgruppen 54-57 bilden jeweils eine Bremseinheit 58-61. Die Bremseinheiten 58, 59 werden vom ersten Kanal 20 und die Bremseinheiten 60, 61 vom zweiten Kanal 22 angesteuert.

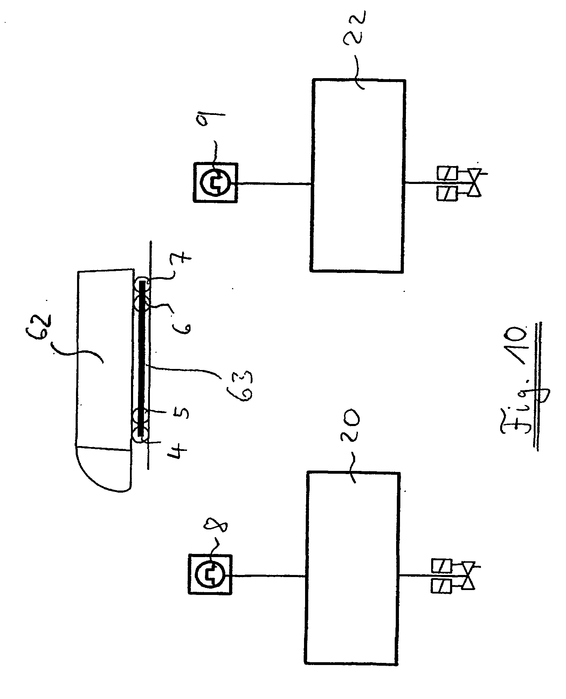

Fig. 10 zeigt ein Ausführungsbeispiel eines Zugfahrzeugs 62, das vier Achsen 4-7 aufweist, die kinematisch über eine Schubstange 63 gekoppelt sind. Den beiden Achsen 4, 5 ist ein Raddrehzahlsensor 8 eines ersten Kanals 20 und den Achsen 6, 7 ein Raddrehzahlsensor 9 eines zweiten Kanals 22 zugeordnet. Der Kanal 20 steuert die Bremsen der Achsen 4, 5 und der Kanal 22 entsprechend die Bremsen der Achsen 6, 7.

## Patentansprüche

1. Bremsanlage für mit einer ABS-Anlage bzw. einer Gleitschutzanlage ausgerüstete Fahrzeuge, mit
Raddrehzahlsensoren (8-11) zur Sensierung von Raddrehzahlsignalen und
einer Recheneinrichtung (12), die mindestens zwei Kanäle (20, 22; 48-50) aufweist, zur separaten Berechnung von mindestens zwei der tatsächlichen Fahrzeuggeschwindigkeit angenäherten Referenzgeschwindigkeiten (v_{ref1}, v_{ref2}) aus Raddrehzahlsignalen und zur Erzeugung von auf den Referenzgeschwindigkeiten (v_{ref1}, v_{ref2}) basierenden Steuersignalen für Blockierschutzventile, wobei einem ersten Kanal ein erster Teil der Blockierschutzventile und einem zweiten Kanal ein zweiter Teil der Blockierschutzventile zugeordnet ist, **dadurch gekennzeichnet, daß** dem ersten Kanal (20) für die Referenzgeschwindigkeitsberechnung ein vorgegebener erster Teil der Raddrehzahlsensoren (8, 9) mit mindestens zwei der vorhandenen Raddrehzahlsensoren zugeordnet ist und dem zweiten Kanal (22) für die Referenzgeschwindigkeitsberechnung ein vorgegebener zweiter Teil der Raddrehzahlsensoren (10, 11) mit mindestens zwei anderen der vorhandenen Raddrehzahlsensoren zugeordnet ist.

2. Bremsanlage nach Anspruch 1, **dadurch gekennzeichnet,**
**daß** jedem der Kanäle (20, 22; 48-50) jeweils mindestens ein Raddrehzahlsensor (8-11; 38-47) einer Vorderachse (4, 6) und einer Hinterachse (5, 7, 36, 37) zugeordnet ist.

3. Bremsanlage nach einem der Ansprüche 1 oder 2, **dadurch gekennzeichnet,**
**daß** die Recheneinrichtung (12) eine Kontrolleinrichtung (13) aufweist zur Plausibilitätsprüfung der von den Raddrehzahlsensoren (8-11) gelieferten Raddrehzahlsignale.

4. Bremsanlage nach einem der Ansprüche 1 bis 3, **dadurch gekennzeichnet,**
**daß** jedem der beiden Kanäle (20, 22) mindestens drei Raddrehzahlsensoren (8, 24, 11; 9, 10, 25-Fig. 4) zugeordnet sind, wobei die Raddrehzahlsensoren eines Kanals jeweils unterschiedlichen Achsen (4-7) zugeordnet sind.

5. Bremsanlage nach einem der Ansprüch 1 bis 4, wobei das Fahrzeug zwei Achsgruppen mit jeweils zwei Achsen aufweist, **dadurch gekennzeichnet,**
**daß** jedem der beiden Kanäle (20, 22-Fig. 4) jeweils mindestens zwei Raddrehzahlsensoren (8-11-Fig. 4) der einen Achsgruppe und mindestens ein Raddrehzahlsensor der anderen Achsgruppe zugeordnet ist.

6. Bremsanlage nach einem der Ansprüche 1 bis 3, **dadurch gekennzeichnet,**
**daß** das Fahrzeug aus zwei miteinander gekoppelten Fahrzeugeinheiten (26, 27-Fig. 5) besteht und eine vordere eine mittlere und eine hintere Achsgruppe (2, 3, 28-Fig. 5) mit jeweils zwei Achsen (4-7, 36, 37-Fig. 5) vorgesehen ist und daß die Recheneinrichtung genau zwei Kanäle (20, 22-Fig. 5) aufweist, wobei jedem Kanal (20, 22) drei Raddrehzahlsensoren zugeordnet sind, von denen zwei Raddrehzahlsensoren (38, 39-Fig. 5) der vorderen bzw. hinteren Achsgruppe (2; 3) und der dritte Raddrehzahlsensor (40-Fig. 5) der mittleren Achsgruppe (28) zugeordnet sind.

7. Bremsanlage nach einem der Ansprüche 1 bis 3, **dadurch gekennzeichnet,**
**daß** das Fahrzeug aus zwei miteinander gekoppelten Fahrzeugeinheiten besteht und eine vordere, eine mittlere und eine hintere Achsgruppe (2, 3, 28-Fig. 6) mit jeweils zwei Achsen (4-7, 36, 37-Fig. 6) aufweist, **dadurch gekennzeichnet,**
**daß** die Recheneinrichtung drei Kanäle (48-50-Fig. 6) aufweist, wobei jedem Kanal (48-50-Fig. 6) mindestens zwei Raddrehzahlsensoren (38-47-Fig. 6) zugeordnet sind, wobei die Raddrehzahlsensoren (38-47) eines Kanals (48-50) jeweils unterschiedlichen Achsgruppen (2, 3, 28) zugeordnet sind.

8. Bremsanlage nach einem der Ansprüche 1 bis 3, wobei das Fahrzeug aus drei miteinander gekoppelten Fahrzeugeinheiten (51-53-Fig. 9) besteht und insgesamt vier Achsgruppen (54-57-Fig. 9) mit jeweils zwei Achsen aufweist, **dadurch gekennzeichnet,**
**daß** die Recheneinrichtung zwei Kanäle (20, 22-Fig. 9) aufweist, wobei jedem Kanal (20, 22) mindestens zwei Raddrehzahlsensoren zugeordnet sind, die jeweils unterschiedlichen Achsgruppen (54-57) derselben Fahrzeugeinheit (51-53) zugeordnet sind.

9. Bremsanlage nach einem der Ansprüche 1 oder 3, **dadurch gekennzeichnet,**
**daß** das Fahrzeug ein Schienenzugfahrzeug mit mindestens vier kinematisch miteinander gekoppelten Achsen ist, wobei den Bremsen von jeweils zwei Achsen ein'separater Kanal zugeordnet ist.

10. Bremsanlage nach einem der Ansprüche 1 oder 3, **dadurch gekennzeichnet,**
**daß** das Fahrzeug ein Zweirad (17-Fig. 2) ist, wobei an jedem Rad (18, 19-Fig. 2) zwei Raddrehzahlsensoren (8-11-Fig. 2) vorgesehen sind.

## Claims

1. Brake system for vehicles equipped with an ABS system or an anti-skid system, respectively, comprising wheel speed sensors (8-11) for sensing wheel speed signals, and
a computing means (12) that includes at least two channels (20, 22; 48-50) for separate computation of at least two of the reference speeds (v_{ref1}, v_{ref2}) approximated to the actual vehicle speed from wheel speed signals and for creating control signals for wheel-slide protection valves based on said reference speeds (v_{ref1}, v_{ref2}), with a first part of said wheel-slide protection valves being associated with a first channel and a second part of said wheel-slide protection valves being associated with a second channel, **characterised in that** a predetermined first part (8, 9) of said wheel speed sensors with at least two of the existing wheel speed sensors is associated with said first channel (20) for computing the reference speed, and a predetermined second part (10, 11) of said wheel speed sensors with at least two others of said existing wheel speed sensors is associated with said second channel (22) for computing the reference speed.

2. Brake system according to Claim 1, **characterised in**
**that** at least one respective wheel speed sensor (8-11; 38-47) of a front axle (4, 6) and a rear axle (5, 7, 36, 37) is associated with each of said channels (20, 22; 48-50).

3. Brake system according to any of the Claims 1 or 2, **characterised in**
**that** said computing means (12) comprises a checking means (13) for checking the wheel speed signals furnished by said wheel speed sensors (8-11) for plausibility.

4. Brake system according to any of the Claims 1 to 3, **characterised in**
**that** at least three wheel speed sensors (8, 24, 11; 9, 10, 25 - Fig. 4) are associated with each of said two channels (20, 22), with the wheel speed sensors of one channel being each associated with different axles (4-7).

5. Brake system according to any of the Claims 1 to 4, wherein the vehicle comprises two groups of axles including each two axles, **characterised in**
**that** at least two respective wheel speed sensors (8-11 - Fig. 4) of said one group of axles and at least one wheel speed sensor of the other group of axles are associated with each of said two channels (20, 22 - Fig. 4).

6. Brake system according to any of the Claims 1 to 3, **characterised in**
**that** the vehicle is constituted by two vehicle units (26, 27 - Fig. 5) coupled to each other and wherein one front, one intermediate and one rear group of axles (2, 3, 28 - Fig. 5), each with two axles (4-7, 36, 37 - Fig. 5) is provided, and that said computing means comprises precisely two channels (20, 22 - Fig. 5), with three wheel speed sensors being associated with each channel (20, 22) whereof two wheel speed sensors (38, 39 - Fig. 5) are associated with said front or rear group of axles (2; 3), respectively, and said third wheel speed sensor (40 - Fig. 5) is associated with said intermediate group of axles (28).

7. Brake system according to any of the Claims 1 to 3, **characterised in**
**that** the vehicle is constituted by two vehicle units coupled to each other and comprises a front, an intermediate and a rear group of axles (2, 3, 28 - Fig. 6), each with two respective axles (4-7, 36, 37 - Fig. 6), **characterised in that** said computing means comprises three channels (48 - 50 - Fig. 6), with at least two wheel speed sensors (38-47 - Fig. 6) being associated with each channel (48-50 - Fig. 6), wherein said wheel speed sensors (38-47) of one channel (48-50) are each associated with different groups of axles (2, 3, 28).

8. Brake system according to any of the Claims 1 to 3, wherein the vehicle is constituted by three vehicle units (51-53 - Fig. 9) coupled to each other and comprises four groups of axles altogether (54-57 - Fig. 9), each with two axles, **characterised in**
**that** said computing means comprises two channels (20, 22 - Fig. 9), with at least two wheel speed sensors being associated with each channel (20, 22), which are associated each with different groups of axles (54-57) of the same vehicle unit (51-53).

9. Brake system according to any of the Claims 1 or 3, **characterised in**
**that** the vehicle is a rail-bound traction vehicle including at least four axles cinematically coupled to each other, with one separate channel being associated with the brakes of two respective axles.

10. Brake system according to any of the Claims 1 or 3, **characterised in**
**that** the vehicle is a bicycle (17 - Fig. 2), wherein two wheel speed sensors (8-11 - Fig. 2) are provided on each wheel (18, 19 - Fig. 2).

## Revendications

1. Système de freinage pour véhicules équipés d'un système antiblocage ou respectivement un système anti-enrayeur, comprenant des capteurs de vitesse de roue (8 -11 ) à détecter des signaux de vitesse de roue, et
un moyen calculateur (12) qui renferme au moins deux voies (20, 22; 48-50) pour le calcul séparé d'au moins deux des vitesses de référence (v_{ref1}, v_{ref2}) approchées à la vitesse actuelle du véhicule à partir des signaux de vitesse de roue et à engendrer des signaux de commande pour des valves d'antienrayeur sur la base desdites vitesses de référence (v_{ref1}, v_{ref2}), à une première partie desdites valves d'anti-enrayeur étant affectée à une première voie et une deuxième partie desdites valves d'anti-enrayeur étant affectée à une deuxième voie, **caractérisé en ce**
**qu'**une première partie prédéterminée (8, 9) desdits capteurs de vitesse de roue avec au moins deux des capteurs de vitesse de roue y existant est affectée à ladite première voie (20) afin de calculer la vitesse de référence, et en ce qu'une deuxième partie prédéterminée (10, 11) desdits capteurs de vitesse de roue avec au moins deux autres des capteurs de vitesse de roue y existant est affectée à ladite deuxième voie (22) afin de calculer la vitesse de référence.

2. Système de freinage selon la revendication 1, **caractérisé en ce**
**qu'**au moins un capteur de vitesse de roue respectif (8-11; 38-47) d'un essieu avant (4, 6) et d'un essieu arrière (5, 7, 36, 37) est affecté à chacune desdites voies (20, 22; 48-50).

3. Système de freinage selon une quelconque des revendications 1 ou 2, **caractérisé en ce**
**que** ledit moyen calculateur (12) comprend un moyen contrôleur (13) pour le contrôle de vraisemblance des signaux de vitesse de roue fournis par lesdits capteurs de vitesse de roue (8-11 ).

4. Système de freinage selon une quelconque des revendications 1 à 3, **caractérisé en ce**
**qu'**au moins trois capteurs de vitesse de roue (8, 24, 11; 9, 10, 25 - Fig. 4) sont affectés à chacune desdites deux voies (20, 22), aux capteurs de vitesse de roue d'une voie étant affectés aux essieux différents (4-7).

5. Système de freinage selon une quelconque des revendications 1 à 4, dans lequel le véhicule comprend deux groupes d'essieux, dont chacune renferme deux essieux, **caractérisé en ce**
**qu'**au moins deux capteurs de vitesse de roue respectifs (8-11 - Fig. 4) de ladite une groupe d'essieux et au moins un capteur de vitesse de roue de l'autre groupe d'essieux sont affectés à chacune desdites deux voies (20, 22 - Fig. 4).

6. Système de freinage selon une quelconque des revendications 1 à 3, **caractérisé en ce**
**que** le véhicule est composé de deux unités de véhicule (26, 27 - Fig. 5) couplées l'une à l'autre, et dans lequel une groupe d'essieux avant, une groupe intermédiaire et une groupe arrière (2, 3, 28 - Fig. 5), à chacune à deux essieux (4 - 7, 36, 37 - Fig. 5), est disposée, et en ce que ledit moyen calculateur comprend exactement deux voies (20, 22 - Fig. 5), à trois capteurs de vitesse de roue étant affectés à chaque voie (20, 22), parmi lesquels deux capteurs de vitesse de roue (38, 39 - Fig. 5) sont affectés à ladite groupe respective avant ou arrière d'essieux (2; 3), et en ce que ledit troisième capteur de vitesse de roue (40 - Fig. 5) est affecté à ladite groupe intermédiaire d'essieux (28).

7. Système de freinage selon une quelconque des revendications 1 à 3, **caractérisé en ce**
**que** le véhicule est composé de deux unités de véhicule, couplées l'une à l'autre, et comprend une groupe avant, une groupe intermédiaire et une groupe arrière d'essieux (2, 3, 28 - Fig. 6), à chaque groupe renferment deux essieux respectifs (4 - 7, 36, 37 - Fig. 6), **caractérisé en ce**
**que** ledit moyen calculateur comprend trois voies (48-50 - Fig. 6), à au moins deux capteurs de vitesse de roue (38-47 - Fig. 6) étant affectés à chaque voie (48-50 - Fig. 6), dans lequel chacun desdits capteurs de vitesse de roue (38-47) d'une voie (48-50) est affecté aux groupes différentes d'essieux (2, 3, 28).

8. Système de freinage selon une quelconque des revendications 1 à 3, dans lequel le véhicule est composé des trois unités de véhicule (51-53 - Fig. 9) couplées l'une à l'autre est comprend quatre groupes d'essieux au total (54-57 - Fig. 9), à chaque groupe renfermant deux essieux, **caractérisé en ce que** ledit moyen calculateur comprend deux voies (20, 22 - Fig. 9), à au moins deux capteurs de vitesse de roue étant affectés à chaque voie (20, 22), dont chacun est affecté aux groupes différentes d'essieux (54-57) de la même unité de véhicule (51-53).

9. Système de freinage selon une quelconque des revendications 1 ou 3, **caractérisé en ce**
**que** le véhicule est un véhicule tracteur sur rails, équipé d'au moins quatre essieux, qui sont couplés, de manière cinématique, l'un à l'autre, à une voie séparée étant affectée aux freins de deux essieux respectifs.

10. Système de freinage selon une quelconque des revendications 1 ou 3, **caractérisé en ce**
**que** le véhicule est une bicyclette (17 - Fig. 2), dans lequel deux capteurs de vitesse de roue (8-11 - Fig. 2) sont disposés à chaque roue (18, 19 - Fig. 2).
